# EUROPÄISCHE PATENTSCHRIFT

(11) **EP 1 623 113 B1**
(45) Veröffentlichungstag und Bekanntmachung des Hinweises auf die Patenterteilung: **04.01.2012**
(21) Anmeldenummer: 04739210.5
(22) Anmeldetag: 14.05.2004
(51) Int. Cl.: F03D 7/02, F03D 11/00, F16H 57/04

(54) **VORRICHTUNG ZUR VERSTELLUNG DES ANSTELLWINKELS EINES ROTORBLATTS EINER WINDKRAFTANLAGE UND DESSEN SCHMIERUNG**
DEVICE FOR ADJUSTING THE ANGLE OF INCIDENCE OF A ROTOR BLADE OF A WIND POWER INSTALLATION AND ITS LUBRICATION
SYSTEME POUR REGLER L'ANGLE D'INCIDENCE D'UNE PALE DE ROTOR D'UNE EOLIENNE ET SA LUBRIFICATION

(30) Priorität: 14.05.2003 DE 10321535
(43) Veröffentlichungstag der Anmeldung: 08.02.2006
(73) Patentinhaber: REpower Systems AG, 22335 Hamburg (DE)
(72) Erfinder: HINZ, Uwe, 25795 Weddingstedt (DE); RAMUNDT, Ernst, Wilhelm, 25767 Albersdorf (DE)
(74) Vertreter: Emmel, Thomas
(86) Internationale Anmeldenummer: PCT/EP2004/005224
(87) Internationale Veröffentlichungsnummer: WO 2004/101989

(56) Entgegenhaltungen:
- EP-A- 1 286 048
- DE-A- 10 129 089
- DE-A- 10 141 667
- FR-A- 1 541 597
- THOMAS BIESLER: "Zentralschmieranlagen in Windkraftanlagen" ERNEUERBARE ENERGIEN, [Online] Juni 2002 (2002-06), XP002299011 HANNOVER Gefunden im Internet: URL:http://www.erneuerbareenergien.de/0602 /wind.html> [gefunden am 2004-10-04] in der Anmeldung erwähnt

## Beschreibung

Die vorliegende Erfindung betrifft eine Vorrichtung zur Verstellung des Anstellwinkels eines Rotorblatts einer Windkraftanlage.

Bei bekannten Vorrichtungen ist das Rotorblatt drehbar an einer Nabe des Rotors der Windkraftanlage so gelagert, daß es über eine im Bereich seiner Blattwurzel angeordneten im wesentlichen quer zur Längsachse des Rotorblattes ausgerichteten Verzahnung mittels eines an der Nabe drehgelagerten, mit der Verzahnung kämmenden Antriebszahnrades in seinem Anstellwinkel verstellt werden kann. Es ist jedoch durchaus auch die umgekehrte Anordnung bekannt, nämlich, dass die Nabe die Verzahnung aufweisen kann und das Antriebszahnrad an dem Rotorblatt drehgelagert sein kann. Ebenso gibt es Anordnungen mit hydraulischen Drehantrieben oder Zylindern, deren Linearbewegung durch Koppelstangen in Drehbewegung umgewandelt wird.

Oben genannte offenen Zahntriebe für die Verstellung des Anstellwinkels eines Rotorblatts einer Windkraftanlage sind z.B. aus der DE 10140793 bekannt. Dabei wird das Antriebszahnrad durch einen Elektromotor angetrieben und in der Regel durch an der Antriebswelle befindliche Bremsen arretiert. Durch die Arretierung des Antriebszahnrades wird auch das Rotorblatt in dem gewünschten Anstellwinkel arretiert.

In der Regel lassen sich offene Zahnantriebe ohne weitere Probleme schmieren, da sie im Laufe eines gegebenen Intervalls den gesamten zur Verfügung stehenden Drehbereich ausnutzen und daher alle Bereiche der Verzahnung regelmäßig in Kontakt mit einer Schmiereinrichtung gebracht werden können.

Eine geeignete Schmiereinrichtung ist aus dem Artikel "Zentralschmieranlagen in Windkraftanlagen" (T. Biesler, "Erneuerbare Energien" 06/2002) bekannt. Dabei kämmt ein z.B. aus Filz bestehendes oder mit Filz überzogenenes Schmierritzel mit einer Verzahnung eines offenen Zahnantriebs. Der Schmierritzel ist auf einer hohlgebohrten, beidseitig über Schmierstoffanschlüsse verfügenden Achse gelagert. Über die Achse wird Schmierstoff an radiale Bohrungen im Schmierritzel übergeben und tritt auf dessen Zahnflanken wieder aus. Bei Verstellung der Verzahnung durch das Antriebszahnrad dreht das Schmierritzel synchron mit und überträgt Schmierstoff auf die jeweils mit ihm in Eingriff stehenden Bereiche der Verzahnung.

Offene Zahnantriebe zur Verstellung des Anstellwinkels eines Rotorblatts einer Windkraftanlage unterscheiden sich von den meisten anderen offenen Zahnantrieben dadurch, daß sie sich während des überwiegenden Teils der Betriebszeit nur in einer definierten Betriebsstellung befinden, die auch als 0°-Stellung bezeichnet wird. Der dieser Stellung entsprechende Anstellwinkel des Rotorblattes kommt beim überwiegenden Teil aller Windsituationen zum Einsatz. Die Zähne des Antriebszahnrades und der Verzahnung, die in der 0°-Stellung miteinander in Eingriff stehen, sind hohen Belastungen ausgesetzt, die insbesondere durch die auftretenden Torsionskräfte des Rotorblatts verursacht werden. In seltenen Fällen (nämlich dann, wenn das Rotorblatt bei Starkwindbedingungen zur Leistungsreduktion aus der 0°-Stellung in eine andere Betriebsstellung verfahren wird) werden andere Zähne des Antriebszahnrades und der Verzahnung belastet.

Die hauptsächlich belasteten Bereiche des Antriebszahnrades und der Verzahnung sind einer hohen Korrosionsgefahr ausgesetzt, da eventuell vorhandener Schmierstoff an den belasteten Zahnflanken im Laufe der Zeit verdrängt wird, so daß die betreffenden Zahnflanken nach einiger Zeit ungeschmiert miteinander kämmen. Aufgrund der hohen übertragenen Kräfte kann daher Reibungskorrosion auftreten. Die Korrosionsgefahr wird häufig durch klimatische Einflüsse (hohe Luftfeuchtigkeit, Salzgehalt der Luft an küstennahen oder Offshore-Standorten) noch verstärkt. Daher verlangen diese Bereiche eine gezielte, regelmäßige Schmierung. Gleichzeitig sind sie jedoch, da sie die meiste Zeit miteinander in Eingriff stehen, für herkömmliche Schmierverfahren nicht oder nur schlecht erreichbar.

Die oben beschriebenen Schmierritzel oder die meisten alternativen Schmiereinrichtungen sind für Zahnantriebe, die überwiegend in einer Betriebsstellung verharren, nicht geeignet, da ein Großteil des an allen Zähnen das Ritzels geförderten Schmierstoffs ungenutzt abtropfen, die Nabe verunreinigen und so die Sicherheit des die Nabe betretenden Wartungspersonals gefährden würde. Eine gezielte Schmierung der hauptsächlich belasteten Bereiche von Antriebszahnrad und Verzahnung ist mit herkömmlichen Schmiereinrichtungen nicht möglich.

Die hauptsächlich belasteten Bereiche offener Zahnantriebe zur Verstellung des Anstellwinkels eines Rotorblatts einer Windkraftanlage lassen sich nur gezielt schmieren, wenn das Rotorblatt aus seiner Betriebsstellung in eine Schmierstellung verfahren wird, um diese Bereiche für herkömmliche Schmierverfahren zugänglich zu machen. Dies kann z.B. während der natürlichen Ruhephasen der Windkraftanlage (z.B. bei Windstille) erfolgen. Diese Vorgehensweise verursacht zwar keine betriebsbedingten Produktionsausfälle, ist aber problematisch, weil eine Produktionsphase sehr lang sein kann, und die Gefahr besteht, dass der tragende Schmierfilm diese Phase nicht übersteht und es so zu Beschädigungen an der Verzahnung kommt. Dies Problem stellt sich insbesondere an küstennahen oder Offshore-Standorten, an denen nur sehr selten Windstille eintritt. Eine weitere Möglichkeit ist die Einführung festgelegter Wartungsintervalle, während derer die Anlage stillgelegt wird, um die Rotorblätter in die Schmierstellung zu verfahren. Diese Vorgehensweise stellt zwar eine ausreichende Schmierung der belasteten Bereiche sicher, ist aber mit einem Produktionsausfall verbunden, der insbesondere von Betreibern ungern in Kauf genommen wird.

Aufgabe der vorliegenden Erfindung ist es, eine Vorrichtung zur Verstellung des Anstellwinkels eines Rotorblatts einer Windkraftanlage mit einer Schmiereinrichtung zur Verfügung zu stellen, die die hauptsächlich belasteten Bereiche des Antriebszahnrades und der Verzahnung regelmäßig und zuverlässig mit Schmierstoff beaufschlagen kann, ohne daß dabei Produktionsausfälle in Kauf genommen werden müssen. Aufgabe ist weiterhin, ein Verfahren zur Verfügung zu stellen, das eine Schmierung dieser Bereiche während des laufenden Betriebs ermöglicht, ohne daß dies zu nennenswerten Produktionsausfällen führt.

Diese Aufgaben werden mit den Merkmalen der Ansprüche 1 und 8 gelöst.

Die erfindungsgemäße Vorrichtung weist wie bekannte Vorrichtungen auch zur Verstellung des Anstellwinkels eines Rotorblatt einer Windkraftanlage eine im Bereich der Rotorblattwurzel angeordnete Verzahnung auf, die mit einem Antriebszahnrad kämmt sowie eine Schmiereinrichtung. Dabei kann die Verzahnung sowohl am Rotorblatt als auch an der Rotornabe angeordnet sein. Entsprechend kann das Antriebszahnrad drehgelagert mit der Rotornabe oder dem Rotorblatt gekoppelt sein. Die Verzahnung ist bevorzugt quer zur Längsachse des Rotorblatts ausgerichtet. Denkbar ist aber auch, dass sie unter anderen Winkeln zu der Längsachse ausgerichtet ist, solange gewährleistet ist, dass über eine Drehung des Antriebszahnrades eine Verstellung des Anstellwinkels des Rotorblatts bewirkt werden kann.

Erfindungsgemäß ist die Schmiereinrichtung so ausgebildet ist, dass durch eine Verstellung des Antriebszahnrades aus einer Betriebsstellung in eine Schmierstellung ein schmierstoff-übertragender Eingriff mit der Stelle der Verzahnung (20) oder des Antriebszahnrades herstellbar ist, die zuvor in Eingriff mit dem Antriebszahnrad oder der Verzahnung stand.

Die vorliegende Erfindung bietet gegenüber dem Stand der Technik den Vorteil, dass besonders hoch belastete Zähne einer Verzahnung oder eines Antriebszahnrades durch das Verfahren aus einer Betriebsstellung in eine Schmierstellung direkt oder indirekt in Eingriff mit einem Schmierstoff gebracht werden können, so dass diese hoch belasteten Zähne gezielt geschmiert werden können. Somit wird sichergestellt wird, dass auf diesen Zähnen immer ein ausreichender Schmierfilm vorhanden ist, wodurch auf vorteilhafte Weise der Verschleiß dieser Zähne minimiert werden kann.

Gemäß der Erfindung erfolgt die Verstellung aus einer Betriebsstellung in eine Schmierstellung über eine Steuereinrichtung.

Gemäß der Erfindung weist die Schmierrichtung ein Schmierritzel auf, dass so angeordnet ist, dass es mit der Verzahnung kämmt. Das Schmierritzel weist eine Schmiereinrichtung auf, die so ausgebildet ist, daß sie mindestens an einem definierten Schmierzahn des Schmierritzels einen Schmierstoffvorrat erzeugen kann. Der Umfangsabstand der Eingriffsstelle des Schmierritzels mit der Verzahnung zur Eingriffsstelle des Antriebszahnrades mit der Verzahnung ist so gewählt, daß durch eine Verstellung des Antriebszahnrades der Schmierzahn aus seiner gegenwärtigen Stellung in Eingriff mit der Stelle der Verzahnung gebracht werden kann, die zuvor in Eingriff mit dem Antriebszahnrad stand. Während dieses Eingriffs wird der Schmierstoffvorrat, den die Schmiereinrichtung am Schmierzahn erzeugt hat, auf diese Stelle der Verzahnung übertragen. Die Stellung, in der sich das Antriebszahnrad (und folglich auch das Schmierritzel, die Verzahnung und das Rotorblatt) vor Beginn der Verstellung befand, wird als Betriebsstellung bezeichnet, während die den Schmierstoffvorrat übertragende Eingriffsstellung als Schmierstellung bezeichnet wird. Wenn die Vorrichtung aus der Schmierstellung zurück in die Betriebsstellung gebracht wird, überträgt die mit Schmierstoff beaufschlagte Stelle der Verzahnung einen Teil des Schmierstoffes auf die korrespondierende Stelle des Antriebszahnrades.

Die Betriebsstellung bezeichnet hierbei die für die aktuellen Bedingungen optimale oder nahezu optimale Einstellung des Rotorblattanstellwinkels. Die Schmierstellung ist in der Regel eine für die aktuellen Bedingungen nicht optimale Einstellung des Anstellwinkels. Es kann jedoch sein, dass die Schmierstellung eines ersten Betriebszustandes die Betriebsstellung eines anderen (zweiten) Betriebszustandes mit veränderten Umgebungsbedingungen darstellt.

Je nach Ausführung der Schmiereinrichtung kann es somit für unterschiedliche Betriebszustände auch unterschiedliche Schmierstellungen und Betriebsstellungen geben. Es ist sogar denkbar, dass sich Betriebsstellung und Schmierstellung für zwei spezielle Betriebszustände genau vertauschen.

In einer zweiten Variante gemäß den oben beschriebenen Ausgestaltungen der Erfindung kämmt das an der Nabe drehgelagerte Schmierritzel nicht mit der Verzahnung, sondern mit dem Antriebszahnrad. In diesem Fall ist der Umfangsabstand der Eingriffsstelle des Schmierritzels mit dem Antriebszahnrad zur Eingriffsstelle der Verzahnung mit dem Antriebszahnrad so gewählt, daß durch eine Verstellung des Antriebszahnrades aus der Betriebsstellung in die Schmierstellung der Schmierzahn in Eingriff mit der Stelle des Antriebszahnrades gebracht werden kann, die zuvor in Eingriff mit der Verzahnung stand. Während dieses Eingriffs wird der Schmierstoffvorrat, den die Schmiereinrichtung am Schmierzahn erzeugt hat, auf diese Stelle des Antriebszahnrades übertragen. Wenn die Vorrichtung aus der Schmierstellung zurück in die Betriebsstellung gebracht wird, überträgt die dermaßen mit Schmierstoff beaufschlagte Stelle des Antriebszahnrades einen Teil des Schmierstoffes auf die korrespondierende Stelle der Verzahnung. Diese Anordnung bietet den Vorteil, dass jeder beliebige Zahn der Verzahnung mit der gleichen geringen Verstellung geschmiert werden kann.

Eine Vorrichtung gemäß beider Varianten ermöglicht es, bestimmte Bereiche des Antriebszahnrades und der Verzahnung durch Verfahren der Vorrichtung aus der Betriebsstellung in die Schmierstellung bei laufendem Betrieb gezielt und regelmäßig mit Schmierstoff zu beaufschlagen. Aufgrund des definierten Umfangsabstandes der Eingriffsstelle des Schmierritzels zur Eingriffsstelle des Antriebszahnrades mit der Verzahnung ist sichergestellt, daß immer die Bereiche des Antriebszahnrades und der Verzahnung mit Schmierstoff beaufschlagt werden, die im laufenden Betrieb miteinander in Eingriff stehen und dabei hohen mechanischen Belastungen ausgesetzt sind, unabhängig davon, ob die aktuelle Betriebsstellung der 0°-Stellung entspricht oder sich von ihr unterscheidet. Letzteres kann z.B. in Starkwindphasen der Fall sein, in denen der Anstellwinkel des Rotorblatts verändert wird, um die Drehzahl des Rotors zu reduzieren und die Windkraftanlage vor Beschädigung zu schützen.

Während der Schmierphase, also der Verstellung des Antriebszahnrades aus der Betriebsstellung in die Schmierstellung und wieder zurück in die Betriebsstellung, ändert sich der Anstellwinkel des Rotorblatts. Die damit einhergehende Änderung der Anströmung des Rotorblatts kann zu einer Verringerung der Rotordrehzahl und der Leistungsabgabe der Windkraftanlage führen. Schwankungen in der Leistungsabgabe einer Windkraftanlage können ab einem bestimmten Schwellenwert bzw. ab einer bestimmten Dauer zu einer nicht gewünschten Unterbrechung der Netzeinspeisung führen.

In einer bevorzugten Ausgestaltung ist daher vorgesehen, den Umfangsabstand der Eingriffsstelle des Schmierritzels zur Eingriffsstelle des Antriebszahnrades mit der Verzahnung so zu wählen, daß die Steuereinrichtung das Antriebszahnrad innerhalb eines Zeitraumes aus der Betriebsstellung in die Schmierstellung und wieder zurück in die Betriebsstellung bringen kann, der kürzer ist als der Zeitraum, ab dem Schwankungen in der Leistungsabgabe zu einer Unterbrechnung der Netzeinspeisung der Windkraftanlage führen würden, bzw. daß sich der Anstellwinkel des Rotorblattes in der Schmierstellung des Antriebszahnrades im Vergleich zur Betriebsstellung nur geringfügig ändert, so daß die sich während der Schmierphase einstellende verminderte Leistung oberhalb einer kritischen Leistung liegt, deren Unterschreitung zu einer Unterbrechnung der Netzeinspeisung der Windkraftanlage führt. Dies geschieht durch möglichst nahe Anordnung des mit der Verzahnung kämmenden Schmierritzels am Antriebszahnrad bzw. - in der beschriebenen zweiten Variante - durch möglichst nahe Anordnung des mit dem Antriebszahnrad kämmenden Schmierritzels an der Verzahnung.

Dadurch wird einerseits sichergestellt, daß sich der Anstellwinkel des Rotorblattes während der Schmierphase nur für kurze Zeit ändert, so daß gewährleistet ist, daß der Rotor aufgrund der Kürze der Schmierphase wegen seines Massenträgheitsmoments seine Drehzahl weitestgehend beibehält und die Leistung der Windkraftanlage nur unwesentlich sinkt. Überdies bleibt selbst bei einer merkbaren Verringerung der Leistung während der Schmierphase die Dauer des Einbruchs unterhalb der kritischen Zeit, ab der die Netzeinspeisung der Windkraftanlage unterbrochen würde.

Andererseits sorgt dieses Merkmal dafür, daß die geringe Veränderung des Anstellwinkels nur zu einer geringeren Veränderung der Anströmung des Rotorblatts führt und sich damit dessen aerodynamischer Wirkungsgrad nur geringfügig ändert. Daher verringert sich die Drehzahl des Rotors während der Schmierphase - unabhängig von deren Dauer - nur unwesentlich, so daß die Leistung der Windkraftanlage nur geringfügig sinkt und oberhalb der kritischen Leistung bleibt, deren Unterschreitung zu einer Abschaltung führen würde.

In einer bevorzugten Ausgestaltung steht während der überwiegend vorherrschenden Betriebsstellung eine definierte Stelle des Antriebszahnrades mit einer definierten Stelle der Verzahnung in Eingriff. Diese Stellung wird als 0°-Stellung bezeichnet und findet bei dem überwiegenden Teil aller Windsituationen Anwendung. Folglich sind die entsprechenden Zähne des Antriebszahnrades und der Verzahnung den höchsten Belastungen ausgesetzt.

In einer bevorzugten Ausgestaltung ist vorgesehen, daß das Schmierritzel einen Überzug aus einem saugfähigen Material aufweist. Dieses Material, das z.B. Filz oder ein synthetischer Schaumstoff sein kann, dient dazu, einen Teil des am Schmierzahn erzeugten Schmierstoffvorrats aufzunehmen und bei jeder Verstellung des Antriebszahnrades auf die Verzahnung zu übertragen. Auf diese Weise wird gewährleistet, daß auch die Bereiche der Verzahnung, die nicht oder nur selten in Eingriff mit dem Antriebszahnrad stehen und daher nicht den genannten hohen Belastungen ausgesetzt sind, gelegentlich mit Schmierstoff versorgt werden.

In einer bevorzugten Ausgestaltung ist vorgesehen, das Schmierritzel mit einer zu ihm beabstandeten Verkleidung zu umgeben. Die Verkleidung begünstigt die Bildung eines Schmierstoffvorrats am Schmierzahn und verhindert, daß der geförderte Schmierstoff in die Umgebung abtropft und z.B. die Nabe der Windkraftanlage verunreinigt.

In einer weiteren bevorzugten Ausgestaltung ist vorgesehen, die Schmiereinrichtung so auszubilden, daß sie an mehreren Zähnen des Schmierritzels einen Schmierstoffvorrat erzeugen kann. Auf diese Weise wird sichergestellt, daß während der Schmierphase auch die Bereiche der Verzahnung und des Antriebszahnrades geschmiert werden, die den Stellen benachbart sind, die zuvor in Eingriff mit dem Antriebszahnrad oder der Verzahnung standen.

In einer weiteren bevorzugten Ausgestaltung ist vorgesehen, als Schmierstoff Fett zu verwenden. Dies hat zwar schlechtere Kriecheigenschaften als z.B. Schmieröl, haftet aber besser an den beaufschlagten Flächen und führt nicht zu Verunreinigungen. Überdies weist Schmierfett, wenn es mit Graphit, Molybdänsulfit oder ähnlichen Additiven versetzt ist, bessere Notlaufeigenschaften auf als Schmieröl.

Erfindungsgemäß ist weiterhin ein Verfahren zur Schmierung der Eingriffsstelle einer Verzahnung oder eines Antriebszahnrades einer erfindungsgemäßen Vorrichtung vorgesehen, bei dem die Schmierung mit der Schmiereinrichtung der erfindungsgemässen Vorrichtung im laufenden Betrieb der Windkraftanlage in dem Zeitraum durchgeführt wird, innerhalb dessen das Antriebszahnrad aus einer Betriebsstellung in eine Schmierstellung und wieder zurück in eine Betriebsstellung gebracht wird.

In einer bevorzugten Ausgestaltung ist vorgesehen, daß das Antriebszahnrad innerhalb eines Zeitraumes aus der Betriebsstellung in die Schmierstellung und wieder zurück in die Betriebsstellung gebracht wird, der kürzer ist als der Zeitraum, ab dem Schwankungen in der Leistungsabgabe zu einer Unterbrechung der Netzeinspeisung der Windkraftanlage führen.

In einer weiteren bevorzugten Ausgestaltung ist vorgesehen, daß die Schmierung in bestimmten regelmäßigen Intervallen durchgeführt wird. Die Länge der Intervalle hängt dabei von verschiedenen Faktoren ab, z.B. von den Eigenschaften der verwendeten Materialien von Verzahnung und Antriebszahnrad, den klimatischen Bedingungen am Standort oder den dort herrschenden Windbedingungen. An küstennahen oder Offshore-Standorten kann z.B. eine erhöhte Korrosion der beanspruchten Bereiche auftreten, so daß relativ kurze Intervalle mit einer Länge von z.B. weniger als einem Tag erforderlich sein können. Bei überwiegend starken Winden, häufig ändernden Windrichtungen oder Standorten mit Neigung zu Böen können die resultierenden hohen Belastungen der beanspruchten Bereiche ebenfalls relativ kurze Intervalle erforderlich machen. Im Gegensatz dazu können an küstenfernen, wenig korrosionsträchtigen Standorten oder bei konstanten Windbedingungen relativ lange Intervalle mit einer Länge von z.B. 14 Tagen ausreichen.

Die Länge eines Schmierintervalls kann vorteilhafterweise als Parameter in einer Steuereinrichtung hinterlegt werden, wobei unter Steuereinrichtung sowohl das Betriebsführungssystem der Windenergieanlage verstanden werden kann als auch eine separate Steuereinrichtung. Die Hinterlegung des Schmierintervalls als Parameter in einer Steuereinrichtung bietet den Vorteil, dass eine Anpassung des Intervalls in Abhängigkeit vom Standort leicht angepasst werden kann.

In einer weiteren bevorzugten Ausgestaltung ist vorgesehen, daß die Schmierung nur dann durchgeführt wird, wenn die Windkraftanlage im laufenden Betrieb eine bestimmte Mindestleistung aufweist. Hierdurch soll verhindert werden, daß eine sich während der Schmierphase einstellende, trotz naher Anordnung des mit der Verzahnung kämmenden Schmierritzels am Antriebszahnrad bzw. - in der beschriebenen zweiten Variante - naher Anordnung des mit dem Antriebszahnrad kämmenden Schmierritzels an der Verzahnung auftretende verminderte Leistung oberhalb der kritischen Leistung liegt, deren Unterschreitung zu einer Unterbrechung der Netzeinspeisung der Windkraftanlage führen würde.

Dies bedeutet in der Praxis, daß die Schmierung erst ab einer bestimmten Windgeschwindigkeit durchgeführt wird. Bei darunterliegenden Windgeschwindigkeiten könnte die während der Schmierphase u.U. trotz der genannten konstruktiven Maßnahmen hinzunehmende Leistungsminderung dazu führen, daß die kritische Leistung unterschritten und die Windkraftanlage aus der Netzeinspeisung genommen würde. Nach Beendigung der Schmierphase müßte die Anlage dann erst wieder die erforderliche Mindestleistung erreichen, bevor sie wieder ans Netz gehen kann, so daß Ertragseinbußen die Folge wären.

Im folgenden sollen verschiedene Ausführungsformen der Erfindung anhand von Zeichnungen beispielhaft näher erläutert werden. Darin zeigen
- Fig. 1: eine Windkraftanlage in Frontalansicht,
- Fig. 2: einen Schnitt gemäß Linie A - A' in Fig. 1,
- Fig. 3: eine alternative Ausführungsform eines Details aus Fig. 2,
- Fig. 4: einen Schnitt gemäß Linie A - A' in Fig. 1 in einer anderen Ausführungsform als in Fig. 2

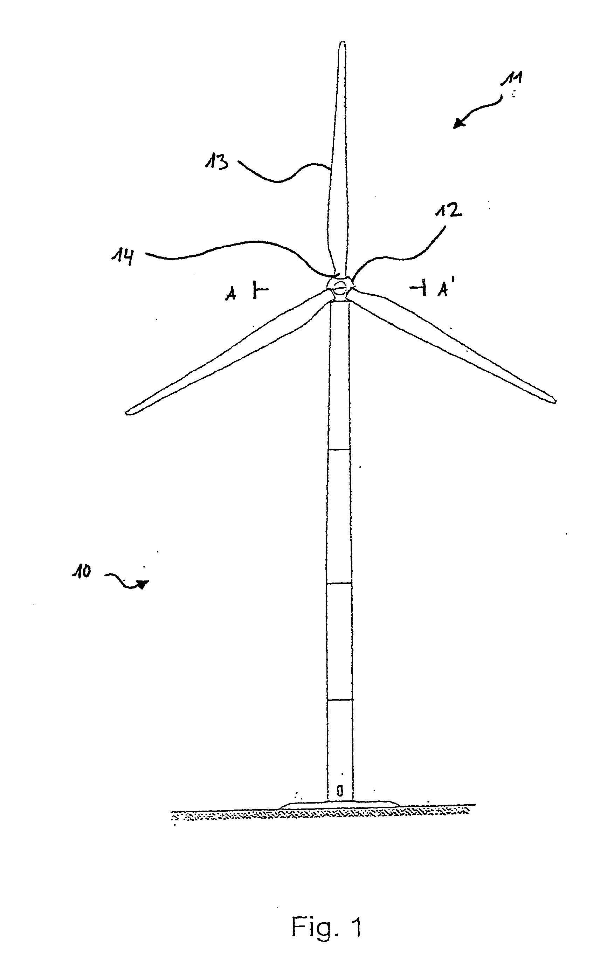

Fig. 1 zeigt eine Windkraftanlage 10 mit einem Rotor 11, einer Nabe 12 sowie einem Rotorblatt 13, das über seine Blattwurzel 14 an der Nabe 12 angeordnet ist.

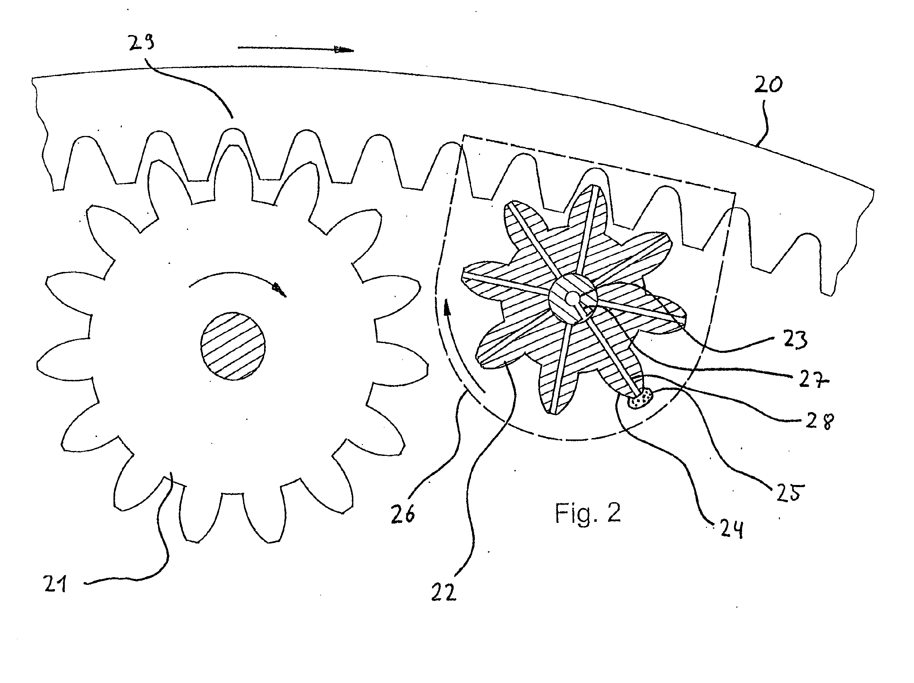

Fig. 2 zeigt in einer Schnittdarstellung eine Vorrichtung zur Verstellung des Anstellwinkels eines Rotorblatts einer Windkraftanlage mit einer Verzahnung 20, einem Antriebszahnrad 21, einem Schmierritzel 22, einer Schmiereinrichtung 23, einem Schmierzahn 24, einem Schmierstoffvorrat 25, einer das Schmierritzel 22 umgebenden Verkleidung 26, einer radialen Bohrung 27 in der Achse des Schmierritzels 22, einer radialen Bohrung 28 im Schmierzahn 24 und einem Bereich 29 der Verzahnung 20. Das Schmierritzel 22 weist entsprechend der Anzahl seiner Zähne weitere radiale Bohrungen auf.

Die Verzahnung 20 ist im Bereich der Blattwurzel 14 des Rotorblatts 13 quer zur Längsachse des Rotorblattes 13 angeordnet. Das Antriebszahnrad 21 ist an der Nabe 12 der Windkraftanlage 10 drehbar gelagert, kämmt mit der Verzahnung 20 und verdreht so bei Verstellung den Anstellwinkel des Rotorblatts 13. Das Antriebszahnrad 21 wird über eine nicht dargestellte Achse durch einen nicht dargestellten Elektromotor angetrieben und durch eine ebenfalls nicht dargestellte, an der Achse des Antriebszahnrads 21 angeordnete Bremse arretiert. Das Schmierritzel 22 ist ebenfalls an der Nabe 12 der Windkraftanlage 10 drehbar gelagert und kämmt mit der Verzahnung 20. Die Schmiereinrichtung 23 fördert über die radiale Bohrung 27 in der Achse des Schmierritzels 22 Schmierstoff in die radiale Bohrung 28 im Schmierzahn 24, an deren äußerem Ende der Schmierstoff austritt und einen Schmierstoffvorrat 25 bildet. Die Bildung des Schmierstoffvorrats 25 wird begünstigt durch die Verkleidung 26, die das Schmierritzel 22 beabstandet umgibt und verhindert, daß der am äußeren Ende der Bohrung 28 austretende Schmierstoff abtropft.

Der Abstand zwischen Antriebszahnrad 21 und Schmierritzel 22 ist so gewählt, daß - bei gegebener Anzahl der Zähne von Verzahnung 20, Antriebszahnrad 21 und Schmierritzel 22 sowie bei gegebener Winkellage der radialen Bohrung 27 - bei Verdrehung des Antriebszahnrades 21 zu Schmierzwecken der Schmierzahn 24 in Eingriff kommt mit dem Bereich 29 der Verzahnung 20 und dabei den Schmierstoffvorrat 25 an den korrespondierenden Zahnflanken ablegt, wobei dieser Bereich, wie in Fig. 2 dargestellt, zuvor in Eingriff mit dem Antriebszahnrad 21 stand.

Die radiale Bohrung 27 in der Achse des Schmierritzels 22 ist an ihrem äußeren Ende horizontal angefräst, so daß Schmierstoff in die radiale Bohrung 28 im Schmierzahn 24 auch dann eintreten kann, wenn die beiden Bohrungen nicht genau konzentrisch zueinander stehen.

In Abweichung zu der in Fig. 2 dargestellten Ausführungsform kann die Achse des Schmierritzels 22 mehr als nur eine radiale Bohrung aufweisen. In dieser Ausführungsform erzeugt die Schmiereinrichtung 23 an mehreren Zähnen des Schierritzels 22 einen Schmierstoffvorrat, so daß während der Schmierphase ein breiterer Bereich der Verzahnung 20 mit Schmierstoff beaufschlagt werden kann.

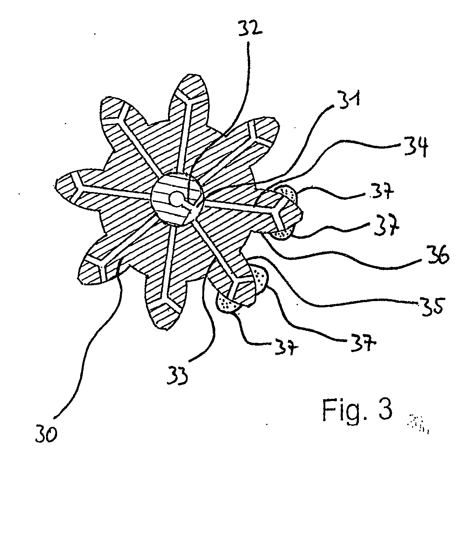

Fig. 3 zeigt alternative Ausführungsformen des in Fig. 2 dargestellten Schmierritzels 21. Im Unterschied zu letzterem sind die radialen Bohrungen des Schmierritzels 30 an ihrem distalen Ende gegabelt, so daß Schmierstoff nicht an der Spitze des Schmierzahns, sondern an dessen Flanken austritt.

Überdies ist der angefräste Bereich 31 der Bohrung 32 in der Achse des Schmierritzels 30 so dimensioniert, daß, wenn z.B. die radialen Bohrungen 33 und 34 des Schmierritzels 30 im gleichen Winkel zu der Bohrung 32 stehen, Schmierstoff in beide Bohrungen 33, 34 eintreten kann. Der Schmierstoff tritt aufgrund der Gabelungen dieser Bohrungen an den Flanken der korrespondierenden Schmierzähne 35 und 36 aus und bildet dort die Schmierstoffvorräte 37.

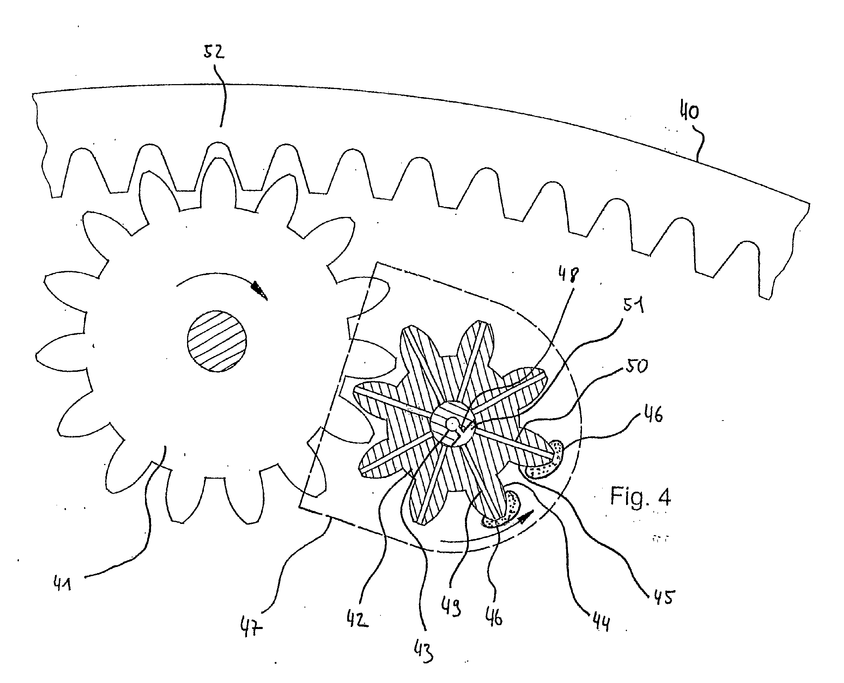

Fig. 4 zeigt in einer anderen Ausführungsform als in Fig. 2 eine Vorrichtung zur Verstellung des Anstellwinkels eines Rotorblatts einer Windkraftanlage mit einer Verzahnung 40, einem Antriebszahnrad 41, einem Schmierritzel 42, einer Schmiereinrichtung 43, den Schmierzähnen 44 und 45, den Schmierstoffvorräten 46, einer das Schmierritzel 42 umgebenden Verkleidung 47, einer radialen Bohrung 48 in der Achse des Schmierritzels 42, den radialen Bohrungen 49 und 50 in den Schmierzähnen 44 und 45, und einem Bereich 52 der Verzahnung 40. Das Schmierritzel 42 weist entsprechend der Anzahl seiner Zähne weitere radiale Bohrungen auf.

Die Bohrung 48 in der Achse des Schmierritzels 42 weist einen angefrästen Bereich 51 auf, der so dimensioniert ist, daß, wenn z.B. die radialen Bohrungen 49 und 50 des Schmierritzels 42 im gleichen Winkel zu der Bohrung 48 stehen, Schmierstoff in beide Bohrungen eintreten kann, an den Spitzen der korrespondierenden Schmierzähne 44 und 45 austritt und dort die Schmierstoffvorräte 46 bildet.

In dieser Ausführungsform ist das Schmierritzel 42 so an der Nabe 12 der Windkraftanlage 10 gelagert, daß es statt mit der Verzahnung 40 mit dem Antriebszahnrad 41 kämmt. In diesem Fall ist der Abstand zwischen Verzahnung 40 und dem Schmierritzel 42 wiederum so gewählt, daß - bei gegebener Anzahl der Zähne von Verzahnung 40, Antriebszahnrad 41 und dem Schmierritzel 42 sowie bei gegebener Winkellage der radialen Bohrung 48 - bei Verdrehung des Antriebszahnrades 41 zu Schmierzwecken die Schmierzähne 44 und 45 in Eingriff kommen mit dem Bereich des Antriebszahnrades 41, der zuvor in Eingriff mit der Verzahnung 40 stand, und dabei die Schmierstoffvorräte 46 an den korrespondierenden Zahnflanken des Antriebszahnrads 41 ablegen. Erst wenn das Antriebszahnrad 41 zurück in seine Ausgangsposition verdreht, werden diese Schmierstoffvorräte an den korespondierenden Zahnflanken im Bereich 51 der Verzahnung 40 abgelegt.

## Patentansprüche

1. Vorrichtung zur gezielten Verstellung des Anstellwinkels eines mit seiner Blattwurzel (14) drehbar an einer Nabe (12) eines Rotors (11) einer Windkraftanlage (10) gelagerten Rotorblattes (13),
mit einer Verzahnung und einem mit der Verzahnung (20, 40) kämmenden Antriebszahnrad (21, 41),
mit einer Schmiereinrichtung, die ein mit der Verzahnung (20) oder mit dem Antriebszahnrad (41) kämmendes Schmierritzel (22, 42) aufweist, und die an mindestens einem definierten Schmierzahn (24, 44, 45) des Schmierritzels (22, 42) einen Schmierstoffvorrat (25, 46) erzeugen kann, wobei die Schmiereinrichtung so ausgebildet ist, dass durch eine temporäre Verstellung des Antriebszahnrades (21, 41) aus einer Betriebsstellung in eine Schmierstellung ein schmierstoff-übertragender Eingriff mit der Stelle der Verzahnung (20) oder des Antriebszahnrades (41) herstellbar ist, die zuvor in Eingriff mit dem Antriebszahnrad (21) oder der Verzahnung (20, 40) stand,
wobei die Verstellung aus der Betriebsstellung in die Schmierstellung über eine Steuereinrichtung erfolgt, die ausgebildet ist, diese Verstellung im laufenden Betrieb der Windkraftanlage auszuführen.

2. Vorrichtung nach Anspruch 1, **dadurch gekennzeichnet, dass** der Umfangsabstand der Eingriffsstelle des Schmierritzels (22, 42) zur Eingriffsstelle des Antriebszahnrades (21, 41) mit der Verzahnung (20, 40) durch möglichst nahe Anordnung des Schmierritzels (22, 42) an der Verzahnung (20, 40) oder am Antriebszahnrad (21, 41) so gewählt ist, dass
a) die Steuereinrichtung das Antriebszahnrad (21, 41) innerhalb eines Zeitraumes aus der Betriebsstellung in die Schmierstellung und wieder zurück in die Betriebsstellung bringen kann, der kürzer ist als der Zeitraum, ab dem Schwankungen in der Leistungsabgabe zu einer Unterbrechung der Netzeinspeisung der Windkraftanlage (10) führen, und/oder
b) sich der Anstellwinkel des Rotorblattes (13) in der Schmierstellung des Antriebszahnrades im Vergleich zur Betriebsstellung nur so geringfügig ändert, daß die sich in der Schmierstellung einstellende, verminderte Leistung oberhalb einer kritischen Leistung liegt, deren Unterschreitung zu einer Unterbrechnung der Netzeinspeisung der Windkraftanlage (10) führt.

3. Vorrichtung nach Anspruch 1 oder 2, **dadurch gekennzeichnet, daß** während der überwiegend vorherrschenden Betriebsstellung eine definierte Stelle des Antriebszahnrades (21, 41) mit einer definierten Stelle der Verzahnung (20, 40) in Eingriff steht.

4. Vorrichtung nach einem der vorhergehenden Ansprüche, **dadurch gekennzeichnet, daß** das Schmierritzel (22, 42) einen Überzug aus einem saugfähigen Material aufweist.

5. Vorrichtung nach einem der vorhergehenden Ansprüche, **dadurch gekennzeichnet, daß** das Schmierritzel (22, 42) von einer zu ihm beabstandeten Verkleidung (26, 47) umgeben ist.

6. Vorrichtung nach einem der vorhergehenden Ansprüche, **dadurch gekennzeichnet, daß** die Schmiereinrichtung (23, 43) so ausgebildet ist, daß sie an mehreren Zähnen des Schmierritzels (22, 42) einen Schmierstoffvorrat (25, 46) erzeugen kann.

7. Vorrichtung nach einem der vorhergehenden Ansprüche, **dadurch gekennzeichnet, daß** der verwendete Schmierstoff aus Fett besteht.

8. Verfahren zur Schmierung der Eingriffsstelle einer Verzahnung (20) oder eines Antriebszahnrades (41) mit einem Antriebszahnrad (21) oder einer Verzahnung (40) einer Vorrichtung nach einem der vorhergehenden Ansprüche, **dadurch gekennzeichnet, daß** die Schmierung mit der Schmiereinrichtung der Vorrichtung nach einem der vorhergehenden Ansprüche im laufenden Betrieb der Windkraftanlage in einem Zeitraum durchgeführt wird, in dem das Antriebszahnrad (21, 41) aus seiner Betriebsstellung in eine Schmierstellung und wieder zurück in seine Betriebsstellung gebracht wird.

9. Verfahren nach Anspruch 8, **dadurch gekennzeichnet, daß** durch möglichst nahe Anordnung des Schmierritzels (22, 42) an der Verzahnung (20, 40) oder am Antriebszahnrad (21, 41) der Zeitraum kürzer ist als der Zeitraum, ab dem Schwankungen in der Leistungsabgabe zu einer Unterbrechung der Netzeinspeisung der Windkraftanlage (10) führen.

10. Verfahren nach Anspruch 8 oder 9, **dadurch gekennzeichnet, daß** die Schmierung in bestimmten regelmäßigen Intervallen durchgeführt wird.

11. Verfahren nach einem der vorhergehenden Ansprüche 8, 9 oder 10, **dadurch gekennzeichnet, daß** die Schmierung nur dann durchgeführt wird, wenn die Windkraftanlage (10) im laufenden Betrieb eine bestimmte Mindestleistung aufweist.

12. Windkraftanlage mit einer Vorrichtung nach einem der Ansprüche 1 bis 7.

## Claims

1. Device for the targeted adjustment of the angle of incidence of a rotor blade (13) which is rotatably mounted, at the foot (14) thereof, on a hub (12) of a rotor (11) of a wind power installation (10),
comprising a gearing and a driving toothed wheel (21, 41) which meshes with said gearing (20, 40)
and comprising a lubricating device comprising a lubricating pinion (22, 42) meshing with the gearing (20) or the driving toothed wheel (41) and which can produce a lubricant reserve (25, 46) on at least one defined lubricating tooth (24, 44, 45) of the lubricating pinion (22, 42) with the lubricating device being embodied in such a way that, due to a temporary displacement of the driving toothed wheel (21, 41) from an operating position into a lubricating position, it can be engaged with a defined point of the gearing (20) or the driving toothed wheel (41), respectively previously engaged with the driving toothed wheel (21) or the gearing (20, 40), in such a way that it transfers lubricant. whereby the displacement from an operating position into a lubricating position takes place via a control device embodied to effect said displacement during continuous operation of the wind power installation.

2. Device according to the claim 1, **characterized in that** the circumferential distance of the point of engagement of the lubricating pinion (22, 42) to the point of engagement of the driving toothed wheel (21, 41) with the gearing (20, 40) is selected by the closest possible arrangement of the lubricating pinion (22, 42) to the gearing (20, 40) or to the driving toothed wheel (21, 41), respectively, such that
a) the control device can bring the driving toothed wheel (21, 41) from the operating position into the lubricating position and back again into the operating position within a period of time which is shorter than the period of time as of which fluctuations in the output result in an interruption of the input to network of the wind power installation (10), and/or
b) the angle of incidence of the rotor blade (13) in the lubricating position of the driving toothed wheel changes only so slightly as compared to the operating position that the reduced output ensuing in the lubricating position will be above a critical output which, if fallen below, results in an interruption of the input to network of the wind power installation (10).

3. Device according to claim 1 or 2, **characterized in that** a defined point of the driving toothed wheel (21, 41) is engaged with a defined point of the gearing (20, 40) during the predominantly prevailing operating position.

4. Device according to any one of the preceding claims, **characterized in that** the lubricating pinion (22, 42) comprises a coating of an absorbent material.

5. Device according to any one of the preceding claims, **characterized in that** the lubricating pinion (22, 42) is surrounded by a covering (26, 47) spaced from it.

6. Device according to any one of the preceding claims, **characterized in that** the lubricating device (23, 43) is designed such that it can produce a lubricant reserve (25, 46) on several teeth of the lubricating pinion (22, 42).

7. Device according to any one of the preceding claims, **characterized in that** the lubricant used consists of grease.

8. Method for the lubrication of the point of engagement of a gearing (20) or a driving toothed wheel (41) with a driving toothed wheel (21) or a gearing (40) of a device according to any one of the preceding claims, **characterized in that** the lubrication is performed by the lubricating device of the device according to one of the preceding claims within the period of time in which the driving toothed wheel (21, 41) is brought from an operating position into a lubricating position and back again into an operating position.

9. Method according to claim 8, **characterized in that** by closest possible arrangement of the lubricating pinion (22, 42) to the gearing (20, 40) or to the driving toothed wheel (21, 41), respectively, the period of time is shorter than the period of time as of which fluctuations in the output result in an interruption of the input to network of the wind power installation (10).

10. Method according to claim 8 or 9, **characterized in that** the lubrication is performed at specific regular intervals.

11. Method according to claim 8, 9 or 10, **characterized in that** the lubrication is only performed if the wind power installation (10) has a specific minimum output in continuous operation.

12. Wind power installation comprising a device according to one of the claims 1 to 7.

## Revendications

1. Dispositif permettant un ajustage ciblé de l'angle d'incidence d'une pale de rotor (13) fixée, de façon à pouvoir pivoter, par son pied de pale (14) au moyeu (12) d'un rotor (11) d'une éolienne (10),
comportant un engrenage et une roue dentée motrice (21, 41) s'engrenant dans cet engrenage (20, 40),
comportant un dispositif de lubrification présentant un pignon de lubrification (22, 42) s'engrenant dans l'engrenage (20) ou dans la roue dentée motrice (41), ce dispositif de lubrification permettant de produire une réserve de lubrifiant (25, 46) au niveau d'au moins une dent de lubrification (24, 44, 45) définie du pignon de lubrification (22, 42) et étant conçu de façon à ce qu'un déplacement temporaire de la roue dentée motrice (21, 41) d'une position de marche en une position de lubrification permette un engrenage de lubrification avec l'emplacement de l'engrenage (20) ou de la roue dentée motrice (41) précédemment engrené avec la roue dentée motrice (21) ou l'engrenage (20, 40),
le déplacement de la position de marche vers la position de lubrification étant réalisé par l'intermédiaire d'un dispositif de commande conçu pour effectuer ce changement de position pendant que l'éolienne est en service.

2. Dispositif selon la revendication 1, **caractérisé en ce que**, par un agencement du pignon de lubrification (22, 42) aussi proche que possible de l'engrenage (20, 40) ou de la roue dentée motrice (21, 41), la distance périphérique entre le point d'engrènement du pignon de lubrification (22, 42) et le point d'engrènement de la roue dentée motrice (21, 41) avec l'engrenage (20, 40) soit choisie de telle sorte que
a) le dispositif de commande puisse déplacer la roue dentée motrice (21, 41) de la position de marche vers la position de lubrification puis la replacer en position de marche en un intervalle de temps plus court que l'intervalle de temps au-delà duquel des fluctuations de la puissance débitée entraînent une interruption de l'injection dans le réseau électrique du courant fourni par l'éolienne (10), et/ou
b) la modification de l'angle d'incidence de la pale (13) en position de lubrification de la roue dentée motrice par rapport à la position de marche, est suffisamment faible pour que la puissance amoindrie en position de lubrification reste supérieure à une puissance critique en-deçà de laquelle l'injection dans le réseau électrique du courant fourni par l'éolienne (10) serait interrompue.

3. Dispositif selon la revendication 1 ou 2, **caractérisé en ce qu'**en position de marche, laquelle est prédominante la plupart du temps, un point défini de la roue dentée motrice (21, 41) est engrené avec un point défini de l'engrenage (20,40).

4. Dispositif selon l'une des revendications précédentes, **caractérisé en ce que** le pignon de lubrification (22, 42) présente un revêtement en un matériau absorbant.

5. Dispositif selon l'une des revendications précédentes, **caractérisé en ce que** le pignon de lubrification (22, 42) est entouré, à une certaine distance, d'un chemisage (26,47).

6. Dispositif selon l'une des revendications précédentes, **caractérisé en ce que** le dispositif de lubrification (23, 43) est conformé de façon à pouvoir produire au niveau de plusieurs dents du pignon de lubrification (22, 42) une réserve de lubrifiant (25, 46).

7. Dispositif selon l'une des revendications précédentes, **caractérisé en ce que** le lubrifiant employé est composé de graisse.

8. Procédé de lubrification du point d'engrènement d'un engrenage (20) ou d'une roue dentée motrice (41) avec une roue dentée motrice (21) ou un engrenage (40) d'un dispositif selon l'une des revendications précédentes, **caractérisé en ce que** la lubrification à l'aide du dispositif de lubrification du dispositif selon l'une des revendications précédentes est effectuée pendant que l'éolienne est en service en un intervalle de temps au cours duquel la roue dentée motrice (21, 41) est déplacée de sa position de marche en une position de lubrification puis replacée en position de marche.

9. Procédé selon la revendication 8, **caractérisé en ce que**, par un agencement du pignon de lubrification (22, 42) aussi proche que possible de l'engrenage (20, 40) ou de la roue dentée motrice (21, 41), l'intervalle de temps est plus court que l'intervalle de temps au-delà duquel des fluctuations de la puissance débitée entraînent une interruption de l'injection dans le réseau électrique du courant fourni par l'éolienne (10).

10. Procédé selon la revendication 8 ou 9, **caractérisé en ce que** la lubrification est effectuée à des intervalles réguliers définis.

11. Procédé selon l'une des revendications précédentes 8, 9 ou 10, **caractérisé en ce que** la lubrification n'est effectuée que lorsque l'éolienne (10) en service débite une puissance minimale définie.

12. Éolienne équipée d'un Dispositif selon l'une des revendications 1 à 7.
